(19) Europäisches Patentamt
European Patent Office
Office européen des brevets

(11) **EP 4 465 242 A1**

(12) **DEMANDE DE BREVET EUROPEEN**

(43) Date de publication:
**20.11.2024 Bulletin 2024/47**

(21) Numéro de dépôt: **24175633.7**

(22) Date de dépôt: **14.05.2024**

(51) Classification Internationale des Brevets (IPC):
***G06T 7/62*** *(2017.01)*

(52) Classification Coopérative des Brevets (CPC):
**G06T 7/62;** G06T 2207/10028

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **16.05.2023 FR 2304867**

(71) Demandeur: **Orange**
**92130 Issy-les-Moulineaux (FR)**

(72) Inventeurs:
• **HOTEL, Olivier**
**92326 CHATILLON CEDEX (FR)**
• **ROUDET, Franck**
**92326 CHATILLON CEDEX (FR)**
• **ESCOFFIER, David**
**92326 CHATILLON CEDEX (FR)**

(74) Mandataire: **Cabinet Beau de Loménie**
**158, rue de l'Université**
**75340 Paris Cedex 07 (FR)**

(54) **UN PROCEDE D'ESTIMATION D'AU MOINS UNE DIMENSION D'UN OBJET REPRESENTE PAR UN NUAGE DE POINTS**

(57) L'invention concerne un procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

[FIG. 3]

EP 4 465 242 A1

**Description**

Domaine Technique

La présente invention porte sur un procédé et un dispositif pour estimer des dimensions d'un objet, représenté par un nuage de points, tel qu'un nuage de points en 3 dimensions, et peut trouver une application dans de nombreux domaines, comme par exemple celui de la vision par ordinateur, et est applicable à plusieurs sortes d'applications de détection d'objets.

Technique antérieure

Il existe plusieurs méthodes pour estimer la taille d'objets depuis une représentation sous forme de nuage de points. Ainsi, des méthodes issues du domaine de l'analyse de données et/ou de l'intelligence artificielle proposent de construire des modèles de fonctions f, g, h : H=f(h), L=g(l) et D = h(d) pour estimer la largeur L, la hauteur H et la profondeur D en mètre des objets à partir de ces mêmes grandeurs l, h et d en pixels. Il peut s'agir de modèles linéaires ou de réseaux de neurones. D'autres approches, utilisent des réseaux de neurones profonds pour déterminer les pixels appartenant au contour d'un objet et obtenir les dimensions de l'objet en calculant la distance euclidienne entre les points du contour. Cependant, de telles approches sont complexes car elles nécessitent une base de données étiquetées pour déterminer les paramètres des différents modèles. De plus, l'exécution de réseaux de neurones nécessite des architectures spécifiques (GPU ou TPU) pour réaliser l'inférence en temps réel et un détourage parfait de l'objet dont les dimensions sont à estimer.

Il existe donc un besoin de proposer des solutions simples pour estimer les dimensions d'un objet.

Exposé de l'invention

A cet effet, la présente invention propose un procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

La présente invention propose également un dispositif d'estimation d'au moins une dimension d'un objet représenté par un nuage de points relatif à une scène comprenant ledit objet, le dispositif comprenant un ou plusieurs processeurs configurés ensemble ou séparément pour

- estimer une dimension dudit objet, en fonction d'une distance d'au moins un desdits points dudit nuage de points par rapport à un centre dudit nuage de points selon ladite au moins une direction.

Selon au moins un mode de réalisation, on estime une dimension dudit objet, en fonction d'une distance d'au moins un desdits points dudit nuage de points par rapport à un centre dudit nuage de points selon ladite au moins une direction.

Selon au moins un mode de réalisation, le procédé comprend

- une obtention desdites distances, selon au moins une direction, desdits points dudit nuage de points par rapport à un centre dudit nuage de points selon ladite au moins une direction,
- un ordonnancement desdits points en fonction desdites distances obtenues.

Selon au moins un mode de réalisation, le procédé comprend

- une détection d'une variation de distance supérieure à une première valeur entre deux points successifs desdits points ordonnés;

ladite estimation tenant compte de la distance obtenue pour l'un desdits deux points successifs.

Selon au moins un mode de réalisation, le procédé comprend :

- un ordonnancement des points selon un ordre croissant desdites distances obtenues et ladite estimation de ladite dimension dudit objet, selon ladite au moins une direction, tient compte de la distance obtenue la plus petite parmi les distances obtenues desdits deux points.

Selon au moins un mode de réalisation, le procédé comprend

- un ordonnancement des points selon un ordre décroissant desdites distances obtenues et ladite estimation de ladite dimension dudit objet, selon ladite au moins une direction, tient compte de la distance obtenue la plus grande parmi les distances obtenues desdits deux points.

Selon au moins un mode de réalisation, le procédé comprend

- l'obtention d'une coordonnée dudit centre du nuage de points selon une dimension comme étant la médiane des coordonnées des points du nuage de points selon ladite dimension.

Selon au moins un mode de réalisation, le procédé comprend

- l'ordonnancement des points selon un ordre croissant desdites distances obtenues , la dimension estimée est le double de la distance, par rapport au centre du nuage, du point précédent, dans ledit ordonnancement, le premier point dont la distance est supérieure à une première valeur.

Selon au moins un mode de réalisation, le procédé comprend

- l'ordonnancement des points selon un ordre décroissant desdites distances obtenues, la dimension estimée est le double de la distance, par rapport au centre du nuage, du point suivant, dans ledit ordonnancement, le premier point dont la distance est supérieure à une première valeur.

Selon au moins un mode de réalisation, lesdites distances sont normalisées.

Selon au moins un mode de réalisation, le procédé comprend

- une représentation des distances normalisées des points dudit nuage de points, l'indice desdits points étant normalisé,
- une détermination d'une distance entre ladite représentation et la courbe y=x dans un espace de ladite représentation, et dans lequel la dimension estimée est le double de la distance entre ledit centre et le point pour lequel la distance entre la représentation et la courbe y=x est maximale

Selon au moins un mode de réalisation, le procédé comprend

- une comparaison de la dimension estimée à une valeur fonction d'un bruit de mesure
- si ladite valeur estimée est inférieure à ladite valeur fonction dudit bruit de mesure alors la dimension estimée est égale à deux fois la distance entre le point le plus éloigné du centre et ledit centre.

Selon au moins un mode de réalisation, le procédé comprend une estimation de ladite dimension selon trois directions correspondant à la largeur, la profondeur et la hauteur dudit objet, les trois directions estimées définissant une boite englobant ledit objet.

Selon au moins un mode de réalisation, le procédé comprend

- une rotation selon au moins deux angles dudit nuage de points autour dudit centre, ladite dimension étant estimée pour les au moins deux angles
- une sélection de la dimension estimée donnant la boite englobante dont le volume est le plus petit, parmi lesdites dimensions estimées pour lesdits au moins deux angles

Selon au moins un mode de réalisation, le procédé comprend

- une obtention d'au moins deux angles de rotation en incrémentant les valeurs d'angle d'un pas constant.

Selon au moins un mode de réalisation lesdits angles de rotation sont échantillonnés selon la méthode de Nelder-Mead.

Les caractéristiques, présentées isolément dans la présente demande en lien avec certains modes de réalisation du procédé de la présente demande peuvent être combinées entre elles selon d'autres modes de réalisation du présent procédé.

L'invention concerne également un programme d'ordinateur comprenant des instructions pour l'exécution des étapes du procédé selon l'invention, selon l'un quelconque de ses modes de réalisation, lorsque ledit programme est exécuté par un ordinateur.

L'invention concerne également un support d'enregistrement lisible par un ordinateur sur lequel est enregistré un programme d'ordinateur comprenant des instructions pour l'exécution des étapes d'un procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

Brève description des dessins

D'autres caractéristiques et avantages de la présente invention ressortiront de la description faite ci-dessous, en référence aux dessins annexes qui en illustrent des exemples de réalisation, dépourvus de tout caractère limitatif.

[Fig. 1] La figure 1 représente un système mettant en oeuvre certains modes de réalisation de la présente invention,

[Fig. 2] La figure 2 représente des objets sous la forme, chacun, d'un nuage de points,

[Fig. 3] La figure 3 représente un procédé selon certains modes de réalisation de l'invention,

[Fig. 4a] La figure 4a représente une représentation de la distance entre des points d'un nuage de points et le centre du nuage,

[Fig. 4b] La figure 4b représente une représentation normalisée de la distance entre des points d'un nuage de points et le centre du nuage,

[Fig. 5] La figure 5 représente un exemple de boite englobante,

[Fig. 6] La figure 6 représente un exemple de boites englobantes selon deux angles de rotation,

[Fig. 7a] La figure 7a représente un exemple de nuage de points sans rotation,

[Fig. 7b] La figure 7b représente une rotation du nuage de points de la figure 7a.

Description des modes de réalisation

La présente divulgation concerne l'estimation d'une ou de plusieurs dimension(s) d'au moins un objet d'une scène, telle qu'une scène capturée par une image numérique, cet objet étant représenté par un nuage de points. Une scène peut être représentative d'un environnement intérieur ou extérieur et comprendre un ou plusieurs objets inertes, animaux, personnes, un arrière-plan...On peut entendre par objet dans la présente invention, un objet du quotidien, une partie d'un tel objet mais également un être vivant, tel une personne ou un animal, un végétal, ou tout autre élément capturé sur une image. Par scène, on peut entendre une scène représentative d'une image virtuelle ou d'une image réelle.

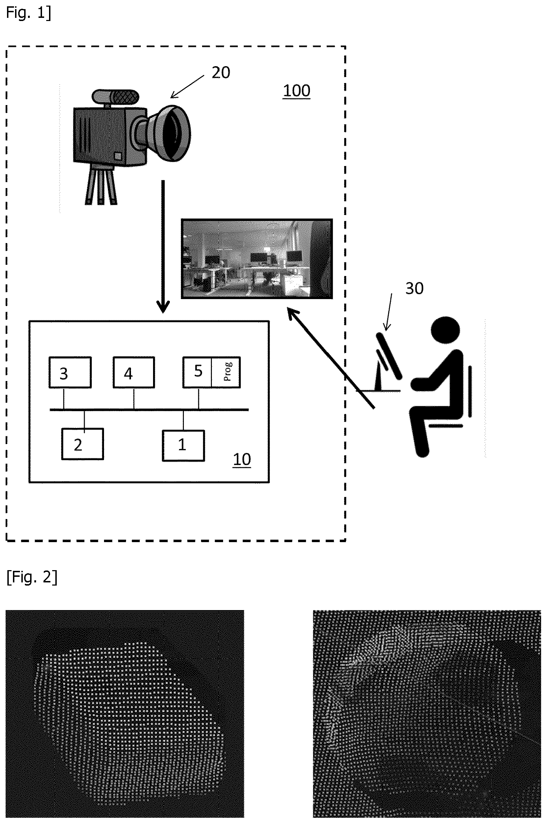

La figure 1 représente un système pouvant mettre en oeuvre au moins certains modes de réalisation de la présente divulgation.

Dans l'exemple de la figure 1, une scène est capturée par des moyens de capture 20. Ces moyens de capture peuvent prendre différentes formes et peuvent notamment être constitués de :

- une ou plusieurs caméras, telles des caméras stéréographiques, et/ou des LIDAR (acronyme anglais de « light détection and ranging »), et/ou des RADAR (acronyme anglais de « radio détection and ranging »), et/ou des caméras plénoptiques, et/ ou des capteurs utilisant des ultra-sons connus comme des appareils ToF (acronyme anglais de « time of flight »)

Ces moyens de capture peuvent être associés à des moyens de traitement 10. Les moyens de traitement 10 et les moyens de capture 20 peuvent être compris dans un même dispositif unique 100 ou appartenir à des dispositifs différents couplés entre eux. Les moyens de traitement comprennent notamment des moyens permettant d'obtenir un nuage de points d'au moins une portion de la scène dont l'image a été capturée par les moyens de capture. Les moyens de traitement peuvent comprendre à ce titre des dispositifs de vision stéréographique, de vision radar, de vision lidar et/ou des dispositifs de type ToF.

Tel qu'illustré par la figure 1, les moyens de traitement peuvent disposer de l'architecture matérielle d'un ordinateur. Ainsi, les moyens de traitement 10 comprennent, notamment, un processeur 1, une mémoire vive 2, une mémoire morte 3 et une mémoire non volatile 4. Ils comportent en outre des moyens de communication 5, par exemple pour communiquer avec le dispositif de capture 20 et/ou une interface utilisateur 30.

La mémoire morte 3 constitue un support d'enregistrement conforme à au moins un mode de réalisation de la présente divulgation, lisible par le processeur 1 et sur lequel est enregistré un programme d'ordinateur PROG conforme à au moins un mode de réalisation de la présente divulgation, comportant des instructions pour l'exécution d'étapes du procédé d'estimation d'au moins une dimension d'au moins un objet selon au moins un mode de réalisation de la présente divulgation. Le programme PROG définit des modules fonctionnels du dispositif.

L'interface utilisateur 30 peut permettre à un utilisateur d'interagir avec le système, par exemple dans certains modes de réalisation avec les moyens de capture et/ou de traitement. Cette interaction avec les moyens de capture et/ou de traitement peut être optionnelle dans certains modes de réalisation. L'interface utilisateur peut prendre différentes formes, notamment un ou plusieurs écrans, tactile ou non, un ou plusieurs claviers ou stylets ou tablette, téléphone mobile ou ordinateur. Sur la figure 1, l'utilisateur a sélectionné une zone englobant un objet dont les dimensions sont à estimer par la présente divulgation.

Les images obtenues par les moyens de capture sont par exemple des images représentant les scènes capturées sous la forme de nuage de points comme illustré en figure 2 . La figure 2 illustre, à titre d'exemple, des images obtenues par les moyens de capture représentant une boîte et un ballon de football dont on souhaite mesurer les dimensions. Ces objets sont présents dans une scène capturée par les moyens de capture. On suppose ici par simplification qu'un détourage des objets de la scène dont on veut estimer les dimensions via le procédé de la présente demande a été effectué préalablement, de façon à distinguer(isoler) avec une certaine précision les points du nuage de points (représentant l'objet) d'autres points représentant la scène capturée (par exemple d'autres points d'une région d'intérêt détectée ou désignée dans une image). Selon les modes de réalisation, ce détourage peut avoir été effectué de différentes façons, par exemple selon le procédé objet de la demande FR2304863 de la demanderesse.

La présente divulgation permet d'estimer la ou les dimensions d'un objet ayant été capturé par un moyen de capture en estimant la dimension d'une boite englobant le nuage de points représentant cet objet (« bounding box » selon la terminologie anglaise). Selon la présente divulgation on recherche la boîte englobante la plus petite, les dimensions de l'objet étant alors considérées comme les dimensions de la boite englobante la plus petite (aussi appelée ci-après « boîte circonscrite » de l'objet).

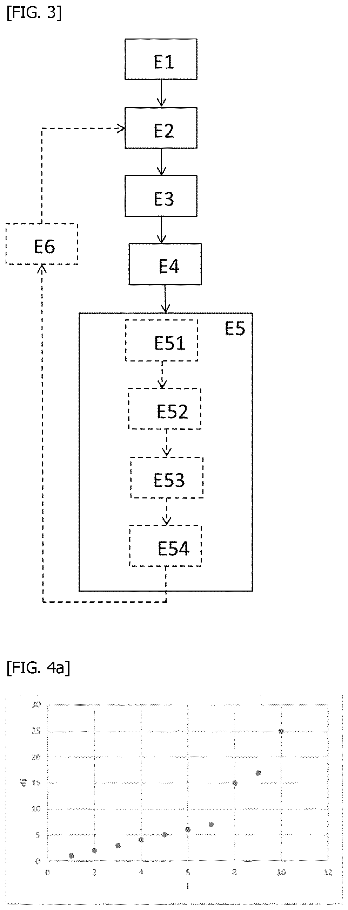

La figure 3 représente un mode de réalisation d'un procédé selon la présente divulgation.

On considère un objet d'une image, représenté sous la forme d'un nuage de points, et dont on souhaite estimer la dimension.

Selon le présent exemple, le nuage de points comprend trois dimensions (x,y,z) mais la présente invention peut s'appliquer à un nuage de points en une ou plusieurs dimensions. Les étapes du procédé décrites ci-dessous se rapportent à l'estimation de la dimension selon la direction x (aussi appelée plus loin axes des abscisses) et les étapes sont reproduites, séquentiellement ou parallèlement pour les autres directions de manière à obtenir l'ensemble des directions. Les étapes décrites ci-après sont adaptées à déterminer la boite circonscrite la plus petite lorsque l'objet est dans l'axe des moyens de capture et, comme expliqué plus tard dans la description, une rotation du nuage de points est envisagée de manière à pouvoir obtenir la plus petite boite circonscrite.

Lors d'une étape E1, on peut déterminer la position du centre du nuage de points et donc ses coordonnées dans la direction considérée. Selon les modes de réalisation, on peut obtenir ou déterminer la position du centre du nuage de points (et donc ses coordonnées) selon différentes méthodes.. Par exemple, on peut déterminer les coordonnées du centre dans une direction comme étant la médiane des coordonnées des points dans cette direction. L'utilisation de la médiane peut permettre de rendre le procédé plus robuste face aux erreurs de mesure et aux valeurs aberrantes que pourrait renvoyer le procédé.

Les coordonnées des points du nuage dans la direction considérée sont obtenues par les moyens de capture tel un lidar par exemple. Lors d'une étape E2, on calcule les distances $d_i$ entre le point $P_i$ et le centre C dans la direction x.

Pour un point Pi, on obtient la distance $d_i$ comme la norme

$$d_i = |x_i - c_x|$$

Lors d'une étape E3, on ordonne (ou, en d'autres termes, trie ou classe) les points $P_i$ en fonction de leur distance $d_i$ avec la coordonnée $C_x$ du centre, par exemple selon une distance $d_i$ croissante avec la coordonnée $C_x$ du centre. La figure 4a illustre une représentation suite à un tel tri.

Selon d'autres modes de réalisation, les points $P_i$ sont ordonnés en fonction de leur distance $d_i$ avec la coordonnée $C_x$ du centre, par exemple selon une distance $d_i$ décroissante avec la coordonnée $C_x$ du centre.

La courbe de la figure 4a indique que les points d'indice 1 à 7 sur l'axe des abscisses forment un premier groupe et qu'il y a une rupture entre le point d'indice 7 et le point d'indice 8. Ainsi, selon la présente divulgation, on détecte, E4, une variation de distance entre deux points successifs des points ordonnés supérieure à une première valeur (jouant le rôle de seuil). Lors d'une étape E5, on estime la dimension dans la au moins une direction à partir d'une représentation des points en tenant compte de la distance obtenue pour l'un desdits deux points successifs.

Lorsque l'ordonnancement des points est effectué selon un ordre croissant des distances obtenues, l'estimation de la dimension de l'objet, selon la au moins une direction, tient compte de la distance obtenue la plus petite parmi les distances obtenues des deux points.

Lorsque l'ordonnancement des points est effectué selon un ordre décroissant des distances obtenues, l'estimation de la dimension de l'objet, selon la au moins une direction, tient compte de la distance obtenue la plus grande parmi les distances obtenues des deux points.

Selon au moins un mode de réalisation, la dimension est estimée comme le double de la distance (par rapport au centre du nuage) associée au point précédent le premier point dont la distance est supérieure à la première valeur lorsque les points sont triés selon un ordre de distance croissante.

Selon au moins un mode de réalisation, la dimension est estimée comme le double de la distance associée au point suivant le premier point dont la distance est supérieure à la première valeur lorsque les points sont triés selon un ordre de distance décroissante.

Cette première valeur correspond, comme illustré sur la figure 4a à un décroché dans le nuage de points ou une rupture et donc à une limite de l'objet considéré.

Cette première valeur peut par exemple être une valeur seuil définie en fonction de l'espacement moyen entre les distances des points d'indice inférieur à i. Par exemple, lorsque l'on détecte que la différence entre la distance associée à un point i et celle associée à un point i+1 est supérieure par exemple à 1,5 fois cet espacement moyen, alors on détecte une rupture.

Selon au moins un autre mode de réalisation, afin de déterminer cette rupture il est également possible de déterminer les différences de distance entre deux points adjacents, un à un, et de sélectionner le point i dont la différence de distance avec le point i+1 est maximale. La dimension de l'objet est obtenue comme étant le double de la distance $d_i$ dudit point i. Le point i est appelé par la suite le point de rupture.

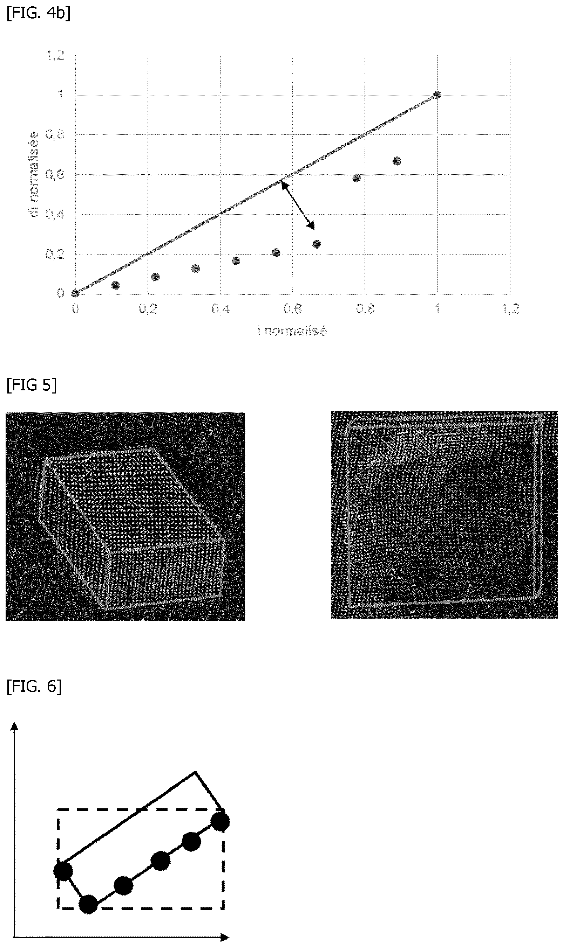

Selon certains modes de réalisation, lors d'une étape E51, on normalise la courbe de la figure 4a pour obtenir la courbe de la figure 4b. Les courbes des figures 4a et 4b représentent pour les points du nuage de points, une distance au centre. La figure 4b représente la courbe de la figure 4a une fois normalisée comme expliqué ci-après ainsi que la courbe d'équation y=x.

i étant un entier supérieur ou égal à 1, on note :

$$m = \min(d_i)$$

$$M = \max(d_i)$$

Avec $\min(d_i)$ et $\max(d_i)$, respectivement les valeurs minimales et maximales de la distance $d_i$.

La courbe normalisée a pour abscisse :

$$x = \frac{i-1}{N-1}$$

et pour ordonnée :

$$y = \frac{d_i - m}{M - m}$$

On trace dans l'espace de cette représentation normalisée de la distance $d_i$ des points i, la droite d'équation y=x, étape E52, comme illustrée en figure 4b.

L'estimation de la distance, selon la dimension considérée, peut comprendre alors une étape E53 de détermination, pour les points i, d'une distance entre sa représentation normalisée et son ordonnée sur la courbe y=x dans l'espace de la représentation.

On détermine le point sur la courbe normalisée dont la distance entre son ordonnée sur la courbe normalisée et son ordonnée sur la courbe y=x est maximale.

La dimension selon la direction considérée, peut alors être estimée comme le double de la distance entre le centre et le point de rupture, soit le point dont la distance entre son ordonnée sur la courbe normalisée et son ordonnée sur la courbe y=x est maximale. Ici, comme indiqué sur la figure 4b, on peut donc voir que cette distance est celle associée au point d'indice 7, comme précédemment sur la figure 4a.

Si l'on note r l'indice du point de rupture, dans l'exemple ci-dessus, r est égal à 7, alors la dimension selon la direction considérée est égale à $2d_r$.

Selon certains modes de réalisation, on peut rajouter de la robustesse à cette estimation en comparant la valeur M définie précédemment à une valeur déterminée, dite de bruit, étape E54. La valeur dite de bruit est déterminée en fonction d'un bruit de mesure d'un dispositif de capture d'une image du nuage de points. Si M est supérieure à cette valeur de bruit de mesure (ou seuil) alors la dimension est égale à $2d_r$ et sinon la dimension est égale à 2M. Ceci peut avantageusement permettre de s'affranchir de bruit parasite. La valeur du seuil peut être fonction de la précision du dispositif de capture du nuage de points. Pour certains dispositifs de captures, elle peut être de l'ordre de quelques millimètres à quelques dizaines de millimètres. Par exemple, si un LIDAR à une précision de +/- 2mm alors toute différence de cet ordre ne correspond pas à une rupture mais à du bruit. On peut filtrer ce bruit de mesure en ne considérant que les ruptures qui lui sont supérieures.

Les étapes du procédé peuvent être répétées ou être effectuées en parallèle, pour au moins une autre dimension de l'objet, par exemple pour les deux autres directions y et z dans les exemples détaillés.

On peut ainsi estimer la dimension selon trois dimensions correspondant à la largeur, la profondeur et la hauteur, les trois dimensions estimées définissant une boite englobant la région d'intérêt comme illustré en figure 5.

Selon certains modes de réalisation, les étapes précédentes peuvent être itérées, ceci afin de vérifier que la boîte obtenue est la plus petite boite circonscrite à la région d'intérêt, comme illustré sur la figure 6. En effet, les étapes du procédé telles que décrites précédemment, permettent d'obtenir la plus petite boîte circonscrite lorsque l'objet est dans l'axe des moyens de capture de l'image. Cependant, lorsque ce n'est pas le cas, il est possible d'effectuer une ou plusieurs rotations du nuage de points et de réitérer les étapes précédemment décrites, afin d'obtenir la plus petite boîte circonscrite.

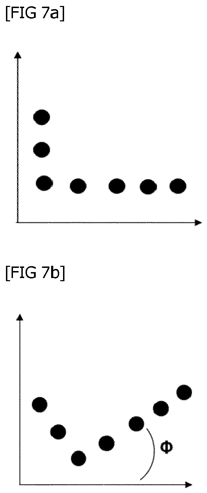

Sur la figure 6, la boîte en pointillé ne représente pas la plus petite boîte circonscrite c'est la boîte en traits pleins qui représente la plus petite boîte circonscrite. Lors des itérations, une rotation du nuage de points selon une pluralité d'angles peut être effectuée, chaque nouvelle itération correspondant par exemple à un angle différent, comme indiqué sur les figures 7a et 7b. La rotation peut être effectuée selon au moins une des directions considérées (par exemple pour chacune de ces directions), ainsi selon un angle $\Phi_x$, $\Phi_y$, $\Phi_z$ dans chacune des directions. Ainsi, l'étape E6 peut consister en une rotation du nuage de points.

Selon certains modes de réalisation la rotation peut être effectuée en incrémentant les valeurs d'angles selon un pas constant ou variable.

Selon certains modes de réalisation, les angles sélectionnés pour chaque itération sont échantillonnés en utilisant un algorithme d'optimisation. A titre d'exemple, parmi les algorithmes d'optimisation utilisés, il peut être envisagé d'utiliser la méthode Nelder-Mead pour effectuer la rotation du nuage de points. La méthode de Nelder-Mead permet de trouver les paramètres minimisant un certain critère. Dans notre cas, les paramètres sont par exemple les angles de rotations du nuage de points et le critère est par exemple le volume de la boite englobante.

Ceci peut aider à limiter le nombre d'itérations nécessaires pour déterminer les angles optimaux (c'est-à-dire minimisant la taille de la boîte englobante) et donc les dimensions de la boite circonscrite correspondant à l'objet et ainsi d'avoir les dimensions (et donc la taille) du nuage de points de l'objet.

Une application de cette divulgation peut notamment trouver intérêt dans l'industrie manufacturière, par exemple dans la vérification de la conformité d'une pièce produite sur des chaînes de fabrication. En permettant d'estimer certaines dimensions d'une pièce (comme une pièce détectée plus ou moins automatiquement, par exemple, par le procédé décrit dans la demande de brevet de la demanderesse citée précédemment), la présente divulgation peut aider à vérifier sa forme, et/ou sa taille et/ou si elle est conforme à un attendu ou à un cahier des charges et ceci de manière au moins partiellement automatique (par exemple sans intervention humaine). Obtenir une meilleure connaissance de la taille (et optionnellement de la localisation) d'objets manipulés par des robots peut également aider à rendre plus stable et plus précis les mouvements des robots.

D'autres applications peuvent concerner le domaine de la logistique. Les modes de réalisation décrits dans cette divulgation peuvent rendre possible la localisation de biens dans des entrepôts. La connaissance de la taille des objets peut aider à limiter l'espace de stockage nécessaire à leur stockage et la gestion de flux dans les entrepôts, en optimisant leur rangement, par exemple dans des conteneurs.

D'autres applications peuvent concerner la conduite autonome de véhicules . Estimer les dimensions d'obstacles (autres véhicules, objets, travaux...).sur la route peut aider à choisir la réponse à apporter à leur présence dans la conduite automatique (écart de la trajectoire, arrêt d'urgence du véhicule etc.. ).

D'autres applications peuvent concerner la construction de cartes de l'environnement pour permettre la navigation de robots, de drones et de véhicules autonomes en présence d'obstacles.

**Revendications**

1. Procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

2. Dispositif d'estimation d'au moins une dimension d'un objet représenté par un nuage de points relatif à une scène comprenant ledit objet, le dispositif comprenant un ou plusieurs processeurs configurés ensemble ou séparément pour

   - estimer une dimension dudit objet, en fonction d'une distance d'au moins un desdits points dudit nuage de points par rapport à un centre dudit nuage de points selon ladite au moins une direction.

3. Procédé selon la revendication 1 comprenant, ou dispositif selon la revendication 2, ledit un ou plusieurs processeurs étant configurés pour :

   - une obtention desdites distances, selon au moins une direction, desdits points dudit nuage de points par rapport à un centre dudit nuage de points selon ladite au moins une direction,
   - un ordonnancement desdits points en fonction desdites distances obtenues.

4. Procédé selon la revendication 3 comprenant, ou dispositif selon la revendication 3, ledit un ou plusieurs processeurs étant configurés pour

   - une détection d'une variation de distance supérieure à une première valeur entre deux points successifs desdits points ordonnés;

ladite estimation tenant compte de la distance obtenue pour l'un desdits deux points successifs.

5. Procédé selon l'une des revendications 1, 3 à 4 comprenant, ou dispositif selon l'une des revendications 2 à 4, ledit un ou plusieurs processeurs étant configurés pour un ordonnancement des points selon un ordre croissant desdites distances obtenues et ladite estimation de ladite dimension dudit objet, selon ladite au moins une direction, tient compte de la distance obtenue la plus petite parmi les distances obtenues desdits deux points.

6. Procédé selon l'une des revendications 1, 3 à 4 comprenant, ou dispositif selon l'une des revendications 2 à 4, ledit un ou plusieurs processeurs étant configurés pour un ordonnancement des points selon un ordre décroissant desdites distances obtenues et ladite estimation de ladite dimension dudit objet, selon ladite au moins une direction, tient compte de la distance obtenue la plus grande parmi les distances obtenues desdits deux points.

7. Procédé selon l'une des revendications 1, 3 à 6 comprenant, ou dispositif selon l'une des revendications 2 à 6, ledit un ou plusieurs processeurs étant configurés pour l'obtention d'une coordonnée dudit centre du nuage de points selon une dimension comme étant la médiane des coordonnées des points du nuage de points selon ladite dimension.

8. Procédé selon l'une des revendications 3 à 6 comprenant, ou dispositif selon l'une des revendications 3 à 6, ledit un ou plusieurs processeurs étant configurés pour

   - l'ordonnancement des points selon un ordre croissant desdites distances obtenues , la dimension estimée est le double de la distance, par rapport au centre du nuage, du point précédent, dans ledit ordonnancement, le premier point dont la distance est supérieure à une première valeur

9. Procédé selon l'une des revendications 3 à 6 comprenant, ou dispositif selon l'une des revendications 3 à 6, ledit un ou plusieurs processeurs étant configurés pour

   - l'ordonnancement des points selon un ordre décroissant desdites distances obtenues,

la dimension estimée est le double de la distance, par rapport au centre du nuage, du point suivant, dans ledit ordonnancement, le premier point dont la distance est supérieure à une première valeur.

10. Procédé selon l'une des revendications 1, 3 à 9 comprenant, ou dispositif selon l'une des revendications 2 à 9, ledit un ou plusieurs processeurs étant configurés pour une normalisation desdites distances obtenues.

11. Procédé selon la revendication 10 ou dispositif selon la revendication 10, dans lesquels l'estimation comprend

> - une représentation des distances normalisées des points dudit nuage de points, l'indice desdits points étant normalisé,
> - une détermination d'une distance entre ladite représentation et la courbe y=x dans un espace de ladite représentation, et dans lequel la dimension estimée est le double de la distance entre ledit centre et le point pour lequel la distance entre la représentation et la courbe y=x est maximale.

12. Procédé selon l'une des revendications 1, 3 à 11 comprenant, ou dispositif selon l'une des revendications 2 à 11 ledit un ou plusieurs processeurs étant configurés pour

> - une comparaison de la dimension estimée à une valeur fonction d'un bruit de mesure
> - si ladite valeur estimée est inférieure à ladite valeur fonction dudit bruit de mesure alors la dimension estimée est égale à deux fois la distance entre le point le plus éloigné du centre et ledit centre.

13. Procédé selon l'une des revendications 1, 3 à 11 comprenant, ou dispositif selon l'une des revendications 2 à 11 ledit un ou plusieurs processeurs étant configurés pour une estimation de ladite dimension selon trois directions correspondant à la largeur, la profondeur et la hauteur dudit objet, les trois directions estimées définissant une boite englobant ledit objet.

14. Procédé selon la revendication 13 comprenant, ou dispositif selon la revendication 13 ledit un ou plusieurs processeurs étant configurés pour une

> - une rotation selon au moins deux angles dudit nuage de points autour dudit centre, ladite dimension étant estimée pour les au moins deux angles
> - une sélection de la dimension estimée donnant la boite englobante dont le volume est le plus petit, parmi lesdites dimensions estimées pour lesdits au moins deux angles.

15. Procédé selon la revendication 14 comprenant, ou dispositif selon la revendication 14 ledit un ou plusieurs processeurs étant configurés pour une obtention d'au moins deux angles de rotation en incrémentant les valeurs d'angle d'un pas constant.

16. Programme d'ordinateur comprenant des instructions pour l'exécution des étapes du procédé selon l'une des revendications 1, 3 à 15.

17. Support d'enregistrement lisible par un ordinateur sur lequel est enregistré un programme d'ordinateur comprenant des instructions pour l'exécution des étapes d'un procédé d'estimation d'au moins une dimension d'un objet représenté par un nuage de points relatif à une scène comprenant ledit objet, dans lequel ladite estimation tient compte d'une distance d'au moins un desdits points dudit nuage de points par rapport à un centre dudit nuage de points selon ladite au moins une direction.

Fig. 1]

[Fig. 2]

[FIG. 3]

[FIG. 4a]

[FIG. 4b]

[FIG 5]

[FIG. 6]

EP 4 465 242 A1

[FIG 7a]

[FIG 7b]

Europäisches
Patentamt

European
Patent Office

Office européen
des brevets

# RAPPORT DE RECHERCHE EUROPEENNE

**Numéro de la demande**

EP 24 17 5633

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SUZUKI TAKUO ET AL: "Point Cloud Processing Method for Food Volume Estimation Based on Dish Space", 2020 42ND ANNUAL INTERNATIONAL CONFERENCE OF THE IEEE ENGINEERING IN MEDICINE & BIOLOGY SOCIETY (EMBC), IEEE, 20 juillet 2020 (2020-07-20), pages 5665-5668, XP033815781, DOI: 10.1109/EMBC44109.2020.9175807 [extrait le 2020-08-24] | 1-3, 7-10, 12-17 | INV. G06T7/62 |
| A | * abrégé * <br> * page 5666, colonne 1 * <br> * figure 1 * <br> ----- | 4-6,11 | |
| X | CN 114 612 547 A (SHENZHEN LINGYUN VIEW TECH LIMITED LIABILITY COMPANY ET AL.) 10 juin 2022 (2022-06-10) | 1-3, 7-10, 12-17 | |
| A | * abrégé * <br> ----- | 4-6,11 | |
| A | US 2017/091957 A1 (DRIEGEN PAUL [CA] ET AL) 30 mars 2017 (2017-03-30) * abrégé * * figure 12 * <br> ----- | 1-17 | **DOMAINES TECHNIQUES RECHERCHES (IPC)** <br> G06T |
| A | RUSU R B ET AL: "Towards 3D Point cloud based object maps for household environments", ROBOTICS AND AUTONOMOUS SYSTEMS, ELSEVIER BV, AMSTERDAM, NL, vol. 56, no. 11, 30 novembre 2008 (2008-11-30), pages 927-941, XP025561289, ISSN: 0921-8890, DOI: 10.1016/J.ROBOT.2008.08.005 [extrait le 2008-08-20] * abrégé * * Section 4.1; page 929 - page 930 * <br> ----- | 1-17 | |

Le présent rapport a été établi pour toutes les revendications

| Lieu de la recherche | Date d'achèvement de la recherche | Examinateur |
|---|---|---|
| Munich | 2 octobre 2024 | Millet, Christophe |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................

& : membre de la même famille, document correspondant

## ANNEXE AU RAPPORT DE RECHERCHE EUROPEENNE
## RELATIF A LA DEMANDE DE BREVET EUROPEEN NO.

EP 24 17 5633

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2024

| Document brevet cité au rapport de recherche | Date de publication | Membre(s) de la famille de brevet(s) | Date de publication |
|---|---|---|---|
| CN 114612547 A | 10-06-2022 | AUCUN | |
| US 2017091957 A1 | 30-03-2017 | CA 2943068 A1 | 25-03-2017 |
| | | US 2017091957 A1 | 30-03-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2304863